(19) Europäisches Patentamt / European Patent Office / Office européen des brevets

(11) **EP 4 538 039 A1**

(12) **EUROPEAN PATENT APPLICATION**
published in accordance with Art. 153(4) EPC

(43) Date of publication:
**16.04.2025 Bulletin 2025/16**

(21) Application number: **23819873.3**

(22) Date of filing: **07.06.2023**

(51) International Patent Classification (IPC):
**B32B 27/30** (2006.01)   **B32B 3/30** (2006.01)
**B32B 27/00** (2006.01)   **E04F 13/07** (2006.01)
**E04F 15/02** (2006.01)

(52) Cooperative Patent Classification (CPC):
**B32B 3/30; B32B 27/00; B32B 27/30; E04F 13/07;
E04F 15/02**

(86) International application number:
**PCT/JP2023/021174**

(87) International publication number:
**WO 2023/238893 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022  JP 2022093202**

(71) Applicant: **Toppan Holdings Inc.
Tokyo 110-0016 (JP)**

(72) Inventor: **HATTORI, Masashi
Tokyo 110-0016 (JP)**

(74) Representative: **TBK
Bavariaring 4-6
80336 München (DE)**

(54) **DECORATIVE SHEET AND METHOD FOR MANUFACTURING DECORATIVE SHEET**

(57)     Provided are a decorative sheet having high designability that is a low gloss and having fingerprint resistance, high durability, high processability, and high productivity, and a method of producing the decorative sheet. Thus, a decorative sheet (1) includes a primary film layer (2) and a surface protective layer (5). The surface protective layer (5) has a glossiness of 12 or less, and has an uneven structure on a surface. The uneven structure has an RSm of 10 or more and 310 or less. The surface protective layer (5) has a Martens hardness of 5 or more and 142 or less, and contains an ionizing radiation-curable resin as a main material. The ionizing radiation-curable resin contains at least one of an alkylene repeating structure and an alkylene oxide repeating structure having a predetermined structure, and contains a resin obtained by polymerizing an acrylic monomer having 2 or more and 4 or less acryloyloxy groups. The acrylic monomer has 2 acryloyl groups, an acryloyl group chain length of 10 or more and 28 or less, and a viscosity of 100 mPa·s or less at 25°C.

FIG.1

EP 4 538 039 A1

# EP 4 538 039 A1

## Description

[Technical Field]

The present invention relates to a decorative sheet used for surface decoration or the like of the interior and exterior, fittings, furniture, fixture materials, floor materials, and the like of buildings, and a method of producing the decorative sheet.

[Background Art]

A decorative sheet is typically bonded via an adhesive or the like to the surface of wood, a wooden board, a metal plate, a nonflammable board, a paper substrate, a resin substrate, or the like to form a decorative plate, and is widely used to impart designability and durability to surfaces in buildings.

The designability of a surface is selected according to the requirement and use in the range from a surface with a pattern such as a wood grain pattern or a stone grain pattern formed using various printing methods to a plain surface with no pattern. Similarly, the gloss of a surface is also an important item for designability, and is selected according to the requirement and use in the range from a high gloss as in a mirror surface to a low gloss with no reflection.

As described above, as with designability, durability is also an important function of decorative sheets. The durability of a decorative sheet is comprehensively evaluated based on whether the decorative sheet has scratch resistance and stain resistance and whether the scratch resistance and stain resistance are continuously guaranteed for a long period. The requirement for a decorative sheet varies depending on the environment and situation in which the decorative sheet is used; however, decorative sheets always having high performance are required.

A decorative sheet having durability typically includes a surface protective layer formed on the outermost surface of the decorative sheet. The surface protective layer typically contains a gloss control agent (matting additive) to adjust the gloss of the decorative sheet, in particular, to allow the decorative sheet to have a low gloss.

Furthermore, a decorative sheet is typically subjected to processing such as cutting and bending to form a decorative plate or a decorative material, and thus preferably has processability capable of withstanding such processing.

A surface protective layer formed on the outermost surface of a decorative sheet as described above preferably allows the decorative sheet to have better properties such as higher durability, designability, and processability described above. At the same time, the raw material of the surface protective layer preferably has high productivity due to its physical properties that easily achieve uniform formation of the surface protective layer at high speed. **In** order to form a surface protective layer at high coating speed and achieve uniform coating to obtain high productivity, a solution used to form the surface protective layer preferably has coating properties capable of withstanding such layer formation. The material with high productivity allows lower production energy consumption, and is thus also preferable in terms of a lower environmental load.

The decorative sheet described in Patent Literature 1 is an example of a decorative sheets produced considering designability (low gloss), scratch resistance, and stain resistance described above.

[Citation List]

[Patent Literature]

[PTL 1] JP 2019-119138 A

[Summary of the Invention]

[Technical Problem]

In recent years, due to a wider range of uses of decorative plates including a decorative sheet and consumers' higher quality awareness, decorative sheets are required to have a glossiness of 12 or less and have fingerprint resistance, scratch resistance, stain resistance, processability, and high productivity.

Among the above requirements, the gloss of a decorative sheet can be adjusted by adding a gloss control agent to the decorative sheet to roughen the surface of the decorative sheet; however, the addition of a large amount of gloss control agent causes the following problems. (1) Fingerprint stains are more difficult to remove from the decorative sheet, and the decorative sheet has lower fingerprint resistance. (2) The gloss control agent is lost during a scratch resistance test, and the decorative sheet has lower scratch resistance. (3) Stains are more difficult to remove from the decorative sheet, and the decorative sheet has lower stain resistance. (4) The gloss control agent causes blushing during bending, and the decorative sheet has lower bending properties. In particular, with regard to processability, when the surface protective layer is formed using a resin having a high crosslinking density to obtain higher scratch resistance, (5) due to curing shrinkage, the sheet tends to be significantly curled and is difficult to laminate on a substrate. Furthermore, (6) due to the excessively hard surface protective layer, the decorative sheet tends to become torn.

In order to solve the above problems, an object of the present invention is to provide a decorative sheet having superior design properties and having a low gloss, and having fingerprint resistance, high durability (particularly, scratch resistance and stain resistance), high processability (allowing the decorative sheet to be easily laminated on a substrate and be less likely to be torn), and high productivity, and a method of producing the decorative sheet.

[Solution to Problem]

The present inventor has found that optimization of an uneven structure of a surface protective layer and experiments conducted to determine the structural elements required for the material of the surface protective layer make it possible to provide a decorative sheet having a glossiness of 12 or less and having fingerprint resistance, high durability (particularly, scratch resistance and stain resistance), high processability (allowing the decorative sheet to be easily laminated on a substrate and be less likely to be torn), and high productivity, and a method of producing the decorative sheet.

In order to solve the problems, a decorative sheet according to an aspect of the present invention includes: a primary film layer; and a surface protective layer provided on a first surface of the primary film layer, wherein the surface protective layer has a glossiness of 12 or less, the surface protective layer has a ridge portion projecting in a ridge shape on a surface to form an uneven structure, the uneven structure of the surface protective layer has an RSm in a range of 10 or more and 310 or less, the surface protective layer has a Martens hardness in a range of 5 or more and 142 or less, the surface protective layer contains an ionizing radiation-curable resin as a main material, a main component of the ionizing radiation-curable resin contains at least one of an alkylene repeating structure and an alkylene oxide repeating structure, and contains a resin obtained by polymerizing an acrylic monomer having 2 or more and 4 or less acryloyloxy groups, the alkylene oxide repeating structure is one of an ethylene oxide structure, a propylene oxide structure, and an $\varepsilon$-caprolactone structure, the acrylic monomer has 2 acryloyl groups, the acrylic monomer has an acryloyl group chain length of 10 or more and 28 or less, the acryloyl group chain length being a number of atoms connecting the acryloyl groups with a shortest distance, and the acrylic monomer has a viscosity of 100 mPa·s or less at 25°C.

The term "acryloyl group chain length" as used here refers to the number of carbon atoms or oxygen atoms connecting the carbonyl carbons of the acryloyl groups of the acrylic monomer that is the main component of the ionizing radiation-curable resin. The "acryloyl group chain length" does not include the number of branched methyl carbons as in isopropylene oxide. That is, the "acryloyl group chain length" refers to the number of atoms connecting the acryloyl groups with the shortest distance. When the acrylic monomer has 3 or more acryloyl groups, the "acryloyl group chain length" is the largest value (number of atoms) selected from all combinations of the acryloyl group chain lengths.

A method of producing the decorative sheet according to another aspect of the present invention is a method of producing the decorative sheet according to the above aspect, the method including irradiating a surface of an applied ionizing radiation-curable resin with light having a wavelength of 200 nm or less, followed by irradiation with ionizing radiation or UV light having a longer wavelength than the light having a wavelength of 200 nm or less to form a surface protective layer having a ridge portion projecting in a ridge shape.

[Advantageous Effects of the Invention]

An aspect of the present invention provides a decorative sheet having a glossiness of 12 or less and having fingerprint resistance, scratch resistance, stain resistance, processability, and productivity, and a method of producing the decorative sheet.

[Brief Description of the Drawings]

Fig. 1 is a schematic cross-sectional view of a configuration of a decorative sheet according to an embodiment of the present invention.

Fig. 2 is a schematic cross-sectional view of a configuration of a surface protective layer of the decorative sheet according to an embodiment of the present invention.

Fig. 3 is a plan photograph showing a configuration example of a surface of the surface protective layer of the decorative sheet according to an embodiment of the present invention.

Fig. 4 is a schematic cross-sectional view of a cross-sectional shape of a ridge portion according to an embodiment of the present invention.

Fig. 5 is a schematic diagram showing changes in the irradiation amount of irradiation light over time in a process of producing the decorative sheet according to an embodiment of the present invention.

Fig. 6 is a schematic cross-sectional view of a measurement method in a curling property test.

[Description of the Embodiments]

A configuration of a decorative sheet according to an embodiment of the present invention will be described below with reference to the drawings.

The drawings are schematic, and the relationship between thickness and horizontal dimension, the thickness ratio of layers, and the like are not to scale. The following embodiment is an example of a configuration for embodying the technical idea of the present invention, and the technical idea of the present invention can be variously modified within the technical scope defined by the claims.

(Configuration)

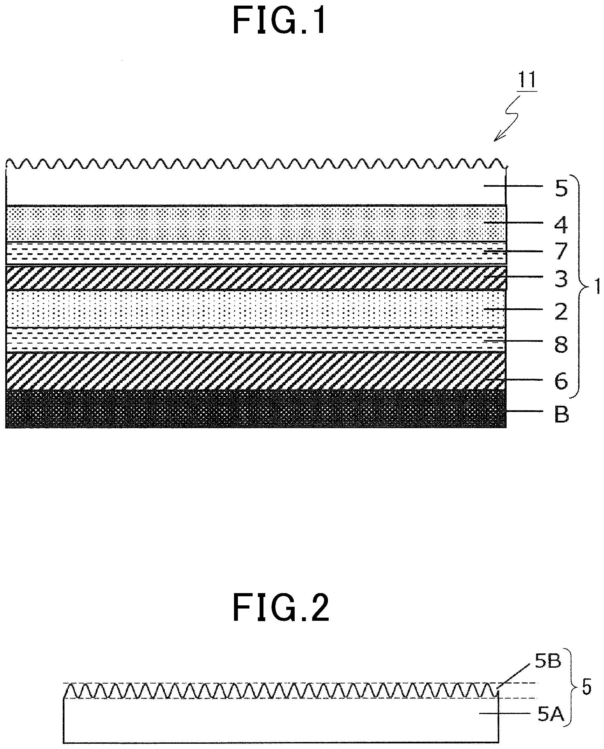

As shown in Fig. 1, in a decorative sheet 1 of the present embodiment, a pattern layer 3, an adhesive layer 7 (heat-sensitive adhesive layer, anchor coat layer, dry lamination adhesive layer), a transparent resin layer 4, and a surface protective layer 5 are laminated in this order on the front surface side of the primary film layer 2, which is one surface side of the primary film layer 2. Furthermore, a concealing layer 8 and a primer layer 6 are provided on the back surface side of the primary film layer 2, which is the other surface side of the primary film layer 2. The pattern layer 3, the adhesive layer 7, the transparent resin layer 4, the concealing layer 8, and the primer layer 6 may be omitted.

As shown in Fig. 1, the decorative sheet 1 of the present embodiment is bonded to a substrate B to constitute a decorative material 11. The substrate B is not specifically limited, and is composed of, for example, a wooden board, an inorganic board, a metal plate, a composite plate made of a plurality of materials, or the like.

<Primary film layer 2>

The primary film layer 2 may be made of, for example, any material selected from paper, synthetic resin, synthetic resin foam, rubber, nonwoven fabric, synthetic paper, metal foil, and the like. Examples of the paper include thin paper, titanium paper, and resin impregnated paper. Examples of the synthetic resin include polyethylene, polypropylene, polybutylene, polystyrene, polycarbonate, polyester, polyamide, ethylene-vinyl acetate copolymer, polyvinyl alcohol, and acryl. Examples of the rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethane. Examples of the nonwoven fabric include organic nonwoven fabric and inorganic nonwoven fabric. Examples of the metal of the metal foil include aluminum, iron, gold, and silver.

When the primary film layer 2 is made of an olefin resin, the primary film layer 2 often has an inert surface, and thus the primer layer 6 is preferably provided between the primary film layer 2 and the substrate B. In addition, in order to improve adhesion between the primary film layer 2 made of an olefin material and the substrate B, the primary film layer 2 may be subjected to, for example, surface modification treatment such as corona treatment, plasma treatment, ozone treatment, electron beam treatment, ultraviolet treatment, or dichromic acid treatment.

The primer layer 6 may be made of the same material as the pattern layer 3 (described later). The primer layer 6 is provided on the back surface of the decorative sheet 1; thus, considering that the decorative sheet 1 is wound in a web form, the primer layer 6 may contain an inorganic filler to avoid blocking and improve adhesion to an adhesive. Examples of the inorganic filler include silica, alumina, magnesia, titanium oxide, and barium sulfate.

The primary film layer 2 preferably has a thickness in the range of 20 $\mu$m or more and 250 $\mu$m or less, considering printing workability, cost, and the like.

<Pattern layer 3>

The pattern layer 3 is a pattern-printed layer formed on the primary film layer 2 using ink. A binder of the ink can be appropriately selected, for example, from binders made of any of nitrocellulose, cellulose, vinyl chloride-vinyl acetate copolymer, polyvinyl butyral, polyurethane, acryl, polyester, and the like, and modified products thereof. The binder may be any of an aqueous binder, a solvent binder, or an emulsion binder, and may be a one-component binder or a two-component binder containing a curing agent. Furthermore, the pattern layer 3 may be formed by using curable ink and curing the ink by irradiation with ultraviolet light, an electron beam, or the like. The most common method is to use urethane ink and cure the ink with isocyanate. In addition to the binder, the pattern layer 3 contains, for example, a colorant such as a pigment or a dye, an extender pigment, a solvent, various additives, and the like contained in normal ink. Examples of highly versatile pigments include condensed azo pigments, insoluble azo pigments, quinacridone, isoindoline, anthraquinone, imidazolone, cobalt, phthalocyanine, carbon, titanium oxide, iron oxide, and pearl pigments such as mica.

Separately from application of ink, a design may be applied to the pattern layer 3 by vapor deposition or sputtering of various metals. The ink particularly preferably contains a photostabilizer, and the ink containing a photostabilizer makes it possible to prevent degradation of the decorative sheet 1 caused by photodegradation of the ink, thus allowing the decorative sheet 1 to have a longer life.

<Adhesive layer 7>

The adhesive layer 7 is a layer also referred to as a heat-sensitive adhesive layer, an anchor coat layer, or a dry lamination adhesive layer.

The resin material of the adhesive layer 7 is not specifically limited, and can be appropriately selected, for example, from resin materials such as an acrylic resin material, a polyester resin material, a polyurethane resin material, and an epoxy resin material. Furthermore, the resin material of the adhesive layer 7 may be, for example, an ethylene-vinyl acetate copolymer resin adhesive. The method of applying an adhesive can be appropriately selected according to the viscosity of the adhesive or the like, but is typically gravure coating. The material is applied to the upper surface of the pattern layer 3 by gravure coating, followed by lamination with the transparent resin layer 4. The adhesive layer 7 may be omitted when the adhesive strength between the transparent resin layer 4 and the pattern layer 3 is sufficient.

<Transparent resin layer 4>

The resin material of the transparent resin layer 4 is preferably an olefin resin. The olefin resin may be, for example, polypropylene, polyethylene, polybutene, or the like, or a homopolymer of one type or a copolymer of two or more types of $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.), a copolymer of ethylene or $\alpha$-olefin and another monomer, such as an ethylene-vinyl acetate copolymer, an ethylene-vinyl alcohol copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, or an ethylene-butyl acrylate copolymer.

In order to allow the decorative sheet 1 to have higher surface strength, the resin of the transparent resin layer 4 is preferably highly crystalline polypropylene. The transparent resin layer 4 may contain, as necessary, for example, various additives such as a thermal stabilizer, a photostabilizer, an antiblocking agent, a catalyst scavenger, a colorant, a light scattering agent, and a gloss control agent. The transparent resin layer 4 typically contains any combination of a thermal stabilizer such as a phenol-based thermal stabilizer, a sulfur-based thermal stabilizer, a phosphorus-based thermal stabilizer, or a hydrazine-based thermal stabilizer and a photostabilizer such as a hindered amine-based photostabilizer.

<Surface protective layer 5>

As shown in Fig. 2, the surface protective layer 5 has a core portion 5A, and a ridge portion 5B projecting in a ridge shape from one surface of the core portion 5A. Thus, an uneven structure is formed on the surface of the surface protective layer 5.

In the decorative sheet 1 according to the present embodiment, the "ridge shape" is a long, narrow, and raised shape linearly continuous in plan view. The ridge portion 5B may be curved or linear in plan view, but is preferably curved from the viewpoint of the fingerprint resistance of the surface of the decorative sheet 1. In the present disclosure, the ridge portion 5B is, for example, a portion from the lowest point to the tip of the uneven structure provided on the surface of the surface protective layer 5, and the core portion 5A is a portion of the surface protective layer 5 other than the ridge portion 5B.

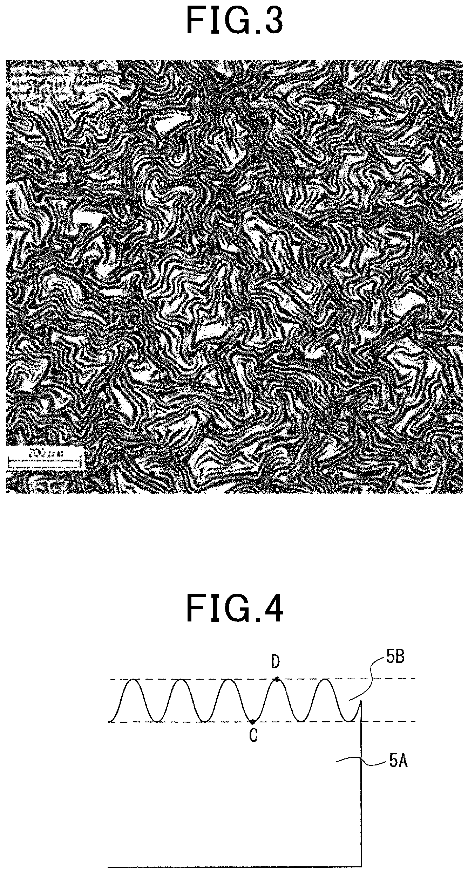

Fig. 2 is a schematic cross-sectional view of a cross section (cross section in the thickness direction of the surface protective layer 5) of the ridge portion 5B of the surface protective layer 5, and Fig. 3 is a plan photograph showing a configuration of the surface of the surface protective layer 5. Fig. 3 is a plan photograph obtained using a laser microscope (OLS-4000 manufactured by Olympus Corporation).

As shown in the plan photograph in Fig. 3, the ridge portion 5B has a long, narrow, and raised shape linearly continuous in plan view. To form the ridge portion 5B, as described later, the surface of a coating film of an acrylic monomer that is a precursor of an applied ionizing radiation-curable resin is irradiated with light having a specific wavelength to cure only the surface layer of the acrylic monomer, and thus an uneven structure is formed on the surface.

The shape of the ridge portion 5B can be indicated by a surface roughness index RSm ($\mu$m) in the lateral direction (the plane direction of the surface protective layer 5 and the horizontal direction in Fig. 2), and the index RSm is preferably 10 or more and 300 or less. More preferably, the index RSm is 10 or more and 250 or less. If the index RSm is less than 10, the ridge portion 5B having an excessively fine shape makes it difficult to wipe off stains, leading to low stain resistance. If the index RSm is more than 310, due to an excessively large ridge interval, a low gloss is not obtained.

Still more preferably, the index RSm is 50 or more and 200 or less. When the index RSm is in this numerical value range, due to a suitably large ridge interval, a higher affinity for water or a cleaning agent (surfactant or alcohol-containing water) is obtained. Thus, when the decorative sheet has an index RSm in the above numerical value range, even if the surface of the decorative sheet becomes stained, stains can be easily wiped off using water or a cleaning agent.

Most preferably, the index RSm is 80 or more and 150 or less. When the decorative sheet has an index RSm in this numerical value range, a commercially available cleaning sponge easily enters the space between the ridges. Thus, even if the surface of the decorative sheet becomes stained, stains can be easily wiped off using a commercially available cleaning sponge.

The index RSm is a measurement value measured using a line roughness meter (in accordance with JIS B 0601).

A cross section of the ridge portion 5B in the thickness direction of the surface protective layer 5 may have a sinusoidal shape.

As shown in Fig. 4, in the cross section of the ridge portion 5B having a "sinusoidal shape", the shape of a sine wave is represented by a line from a lowest point C of the ridge portion 5B to a highest point (apex) D of the ridge portion 5B.

A mechanism of formation of the ridge portion 5B will be described below.

When acrylate is irradiated with light having a wavelength of 200 nm or less as first irradiation light, the acrylate can be self-excited. Thus, when acrylate is irradiated with light having a wavelength of 200 nm or less, the acrylate can be cross-linked. **In** acrylate, light having a wavelength of 200 nm or less reaches a depth of approximately several tens to several hundreds of nanometers. Therefore, only the surface of the acrylate is cross-linked and a portion of the acrylate below the surface has fluidity, thus leading to generation of a fine uneven structure with wavy creases.

The surface protective layer 5 formed in this manner has no interface between the core portion 5A and the ridge portion 5B, and the core portion 5A and the ridge portion 5B are continuously integrated.

Light having a wavelength of 200 nm or less is absorbed by oxygen in air and significantly attenuated. Thus, in processing of the acrylate, nitrogen gas needs to be introduced to control the reaction atmosphere. The residual oxygen concentration in the reaction atmosphere is preferably 2000 ppm or less. More preferably, the residual oxygen concentration in the reaction atmosphere is 1000 ppm or less.

In order to generate an uneven structure using light having a wavelength of 200 nm or less that is first irradiation light, the integrated amount of first irradiation light is preferably 0.5 mJ/cm$^2$ or more and 200 mJ/cm$^2$ or less. More preferably, the integrated amount of first irradiation light is 1 mJ/cm$^2$ or more and 100 mJ/cm$^2$ or less. Still more preferably, the integrated amount of first irradiation light is 3 mJ/cm$^2$ or more and 50 mJ/cm$^2$ or less. Most preferably, the integrated amount of first irradiation light is 5 mJ/cm$^2$ or more and 30 mJ/cm$^2$ or less. If the integrated amount of first irradiation light is less than 0.5 mJ/cm$^2$, due to a weak curing shrinkage reaction, formation of an uneven structure is insufficient, and thus a low gloss is not obtained. If the integrated amount of first irradiation light is more than 200 mJ/cm$^2$, due to an excessively strong curing shrinkage reaction, the surface condition deteriorates.

Light having a wavelength of 200 nm or less can be extracted from excimer VUV light. Excimer VUV light can be generated by a lamp with a noble gas or a noble gas halide compound. When high-energy electrons are externally provided to a lamp in which a noble gas or a noble gas halide compound gas is enclosed, a large amount of discharge plasma (dielectric barrier discharge) is generated. Due to the plasma discharge, discharge gas (noble gas) atoms are excited, and instantaneously brought into an excimer state. When the atoms in the excimer state return to the ground state, the atoms emit light in a wavelength region specific to the excimer.

The gas used for an excimer lamp may be any conventionally used gas that emits light having a wavelength of 200 nm or less. The gas may be a noble gas such as Xe, Ar, or Kr, or a mixed gas of a noble gas and a halogen gas, such as ArBr or ArF. Light emitted from an excimer lamp varies in wavelength (center wavelength) depending on the gas, and has a wavelength of, for example, approximately 172 nm (Xe), approximately 126 nm (Ar), approximately 146 nm (Kr), approximately 165 nm (ArBr), approximately 193 nm (ArF), or the like.

However, considering the difference between the obtained photon energy and the bond energy of organic matter, the light source is preferably a xenon lamp that emits excimer light having a center wavelength of 172 nm. Furthermore, also considering facility maintenance cost, material availability, and the like, the light source is preferably a xenon lamp.

In the acrylate, light having a wavelength of 200 nm or less that is first irradiation light reaches only a depth of approximately several tens to several hundreds of nanometers from the outermost surface; thus, the inner portion of the surface protective layer 5 having the ridge portion 5B formed by irradiation with light having a wavelength of 200 nm or less has fluidity, and requires further curing reaction. In order to cure the surface protective layer 5 after irradiation with light having a wavelength of 200 nm or less, it is possible to use, as second irradiation light, ionizing radiation or UV light having a longer wavelength than the light having a wavelength of 200 nm or less that is first irradiation light.

In the present embodiment, for example, after irradiation with second irradiation light, the surface protective layer 5 may be irradiated, as third irradiation light, with ionizing radiation of a type different from the second irradiation light or UV light having a longer wavelength than the second irradiation light; however, the surface protective layer 5 having the ridge portion 5B is preferably formed only by irradiation with two types of light: first irradiation light and second irradiation light. The surface protective layer 5 may be irradiated with third irradiation light when the strength of the surface protective layer 5 obtained only by irradiation with second irradiation light is insufficient.

In order to cure the entire surface protective layer 5 by irradiation with second irradiation light, the integrated amount of second irradiation light is preferably 10 mJ/cm$^2$ or more and 500 mJ/cm$^2$ or less. More preferably, the integrated amount of second irradiation light is 50 mJ/cm$^2$ or more and 400 mJ/cm$^2$ or less. Still more preferably, the integrated amount of second irradiation light is 100 mJ/cm$^2$ or more and 300 mJ/cm$^2$ or less. If the integrated amount of second irradiation light is less than 10 mJ/cm$^2$, due to a weak curing reaction, the entire surface protective layer 5 has insufficient strength, tending to cause lower scratch resistance. If the integrated amount of second irradiation light is more than 500 mJ/cm$^2$, due to an excessively strong curing reaction, the surface condition tends to be deteriorated.

The integrated amount of second irradiation light is preferably larger than the integrated amount of first irradiation light. The integrated amount of second irradiation light is preferably 1.1 times or more and 50.0 times or less the integrated amount of first irradiation light, and more preferably 5.0 times or more and 30.0 times or less the integrated amount of first irradiation light. If the integrated amount of second irradiation light is less than 1.1 times the integrated amount of first irradiation light, due to a weak curing reaction, the entire surface protective layer 5 may have insufficient strength. If the integrated amount of second irradiation light exceeds 50.0 times the integrated amount of first irradiation light, due to an excessively strong curing reaction on the entire surface protective layer 5, the ridge portion 5B may be deformed.

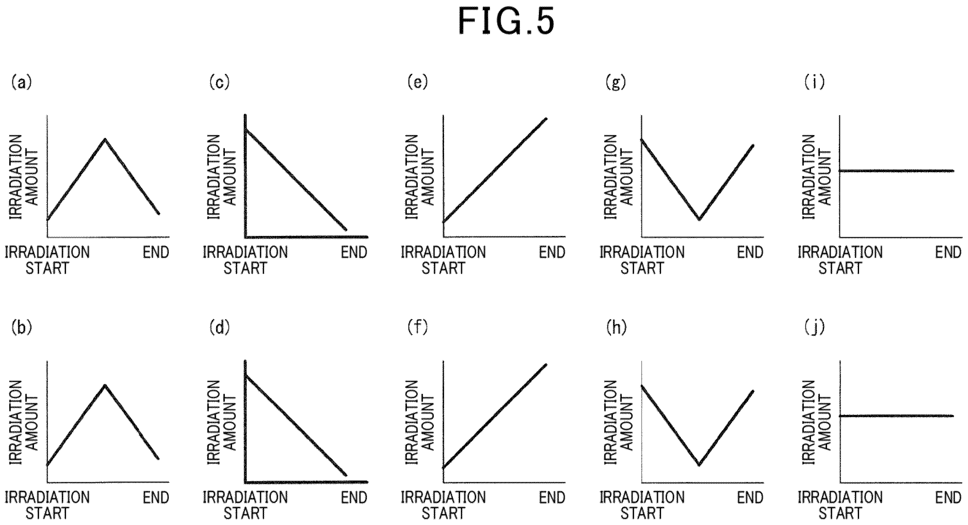

Changes in the irradiation amount of first irradiation light over time and changes in the irradiation amount of second irradiation light over time will be described below with reference to Fig. 5.

Fig. 5 is a schematic diagram showing changes in the irradiation amount of first irradiation light over time and changes in the irradiation amount of second irradiation light over time.

Figs. 5 (a), (c), (e), (g), and (i) are each a schematic diagram showing a change in the irradiation amount of first irradiation light over time. Figs. 5 (b), (d), (f), (h), and (j) are each a schematic diagram showing a change in the irradiation amount of second irradiation light over time.

As shown in Fig. 5 (a), the irradiation amount of first irradiation light may be gradually increased with the elapse of irradiation time, and then gradually decreased with the elapse of irradiation time. As shown in Fig. 5 (c), the irradiation amount of first irradiation light may be gradually decreased with the elapse of irradiation time. As shown in Fig. 5 (e), the irradiation amount of first irradiation light may be gradually increased with the elapse of irradiation time. As shown in Fig. 5 (g), the irradiation amount of first irradiation light may be gradually decreased with the elapse of irradiation time, and then gradually increased with the elapse of irradiation time. As shown in Fig. 5 (i), the irradiation amount of first irradiation light may be constant from the start to the end of the irradiation.

As shown in Fig. 5 (b), the irradiation amount of second irradiation light may be gradually increased with the elapse of irradiation time, and then gradually decreased with the elapse of irradiation time. As shown in Fig. 5 (d), the irradiation amount of second irradiation light may be gradually decreased with the elapse of irradiation time. As shown in Fig. 5 (f), the irradiation amount of second irradiation light may be gradually increased with the elapse of irradiation time. As shown in Fig. 5 (h), the irradiation amount of second irradiation light may be gradually decreased with the elapse of irradiation time, and then gradually increased with the elapse of irradiation time. As shown in Fig. 5 (j), the irradiation amount of second irradiation light may be constant from the start to the end of the irradiation.

In the present embodiment, the irradiation modes for first irradiation light shown in Figs. 5 (a), (c), (e), (g), and (i) and the irradiation modes for second irradiation light shown in Figs. 5 (b), (d), (f), (h), and (j) can be appropriately used in combination. For example, the irradiation mode for first irradiation light shown in Fig. 5 (a) and the irradiation mode for second irradiation light shown in Fig. 5 (f) may be used in combination. Furthermore, the irradiation mode for first irradiation light shown in Fig. 5 (g) and the irradiation mode for second irradiation light shown in Fig. 5 (f) may be used in combination. When the value of the index RSm is set in the range of 10 or more and 310 or less, which is more preferable, the irradiation mode for first irradiation light shown in Fig. 5 (c) and the irradiation mode for second irradiation light shown in Fig. 5 (f) are preferably used in combination.

Thus, the ridge portion 5B formed by irradiation with light having a wavelength of 200 nm or less has a finer structure than an uneven structure formed on the surface of the surface protective layer 5 by mechanical processing such as embossing. The fine uneven structure formed on the surface of the surface protective layer 5 achieves higher fingerprint resistance while maintaining the matte appearance of the surface of the decorative sheet 1.

The surface protective layer 5 is a resin layer having a Martens hardness of 5 N/mm$^2$ or more and 142 N/mm$^2$ or less. More preferably, the Martens hardness of the surface protective layer 5 is 50 N/mm$^2$ or more and 100 N/mm$^2$ or less. A surface protective layer 5 having a Martens hardness of less than 5 N/mm$^2$ leads to lower scratch resistance, and is thus not preferable. A surface protective layer 5 having a Martens hardness of more than 142 N/mm$^2$ causes the problem of the occurrence of unshaped portions, and is thus not preferable.

The above Martens hardness may be the Martens hardness of the ionizing radiation-curable resin constituting the surface protective layer 5.

That is, the ionizing radiation-curable resin constituting the surface protective layer 5 is preferably a resin having a Martens hardness of 5 N/mm$^2$ or more and 142 N/mm$^2$ or less, and more preferably a resin having 50 N/mm$^2$ or more and 100 N/mm$^2$ or less. Specifically, the Martens hardness of a bifunctional acrylic resin that constitutes the surface protective layer 5 and contains, as a repeating structure, one of an ethylene oxide structure, a propylene oxide structure, and an ε-caprolactone structure is preferably 5 N/mm$^2$ or more and 140 N/mm$^2$ or less, and more preferably 50 N/mm$^2$ or more and 100 N/mm$^2$ or less. The value of the Martens hardness can be arbitrarily adjusted by selecting the type or molecular weight of ionizing radiation-curable resin constituting the surface protective layer 5. When the surface protective layer 5 is made of a plurality of types of resins, the value of the Martens hardness can be arbitrarily adjusted by adjusting the content ratio of the resins.

When the surface protective layer 5 is composed of a plurality of layers, the uppermost layer of the surface protective layer 5 may have a Martens hardness in the above numerical value range, and the lowermost layer of the surface protective layer 5 may have a Martens hardness in the above numerical value range. Alternatively, the value of the Martens hardness of the surface protective layer 5 may be gradually decreased or increased from the uppermost layer toward the lowermost layer of the surface protective layer 5.

The Martens hardness defined in the present embodiment is a value measured using a method in accordance with ISO 14577. Furthermore, the Martens hardness defined in the present embodiment is the average of the values measured at 10 random points in a single sample.

The thickness of the surface protective layer 5 is preferably in the range of 2 μm or more and 20 μm or less. More preferably, the thickness of the surface protective layer 5 is in the range of 3 μm or more and 20 μm or less. Still more preferably, the thickness of the surface protective layer 5 is in the range of 5 μm or more and 15 μm or less. Most preferably, the thickness of the surface protective layer 5 is in the range of 5 μm or more and 12 μm or less. If the thickness of the surface protective layer 5 is less than 2 μm, due to a failure in deep shaping with vacuum-ultraviolet light, a low gloss cannot be obtained. If the thickness of the surface protective layer 5 is more than 20 μm, due to lower processability, blushing occurs during bending.

Furthermore, the thickness of the surface protective layer 5 is preferably set so that the ratio between the thickness of the ridge portion 5B and the thickness of the core portion 5A (the thickness of the ridge portion 5B/the thickness of the core portion 5A) is 0.01 or more and 2.0 or less, and more preferably set so that the ratio is 0.1 or more and 1.0 or less.

The pattern layer 3 and the surface protective layer 5 can be formed, for example, using various printing methods such as gravure printing, offset printing, screen printing, electrostatic printing, or inkjet printing. The surface protective layer 5 covers the entire surface of the primary film layer 2 on the front surface side, and thus can also be formed, for example, using various coating methods such as roll coating, knife coating, micro gravure coating, or die coating. Such a printing method or coating method may be selected separately for each layer to be formed, or the same method may be selected to perform collective processing.

The pattern layer 3 and the surface protective layer 5 may be matched with each other from the viewpoint of designability. When the pattern layer 3 and the surface protective layer 5 are matched with each other, the surface protective layer 5 needs to be collectively formed after formation of the pattern layer 3, and thus gravure printing is preferably used. Gravure printing allows relatively high-speed processing and is advantageous in terms of cost, and is thus preferable. The state in which the pattern layer 3 and the surface protective layer 5 are matched with each other refers to a state in which 50% or more, preferably 70% or more, and most preferably 90% or more of the formed surface protective layer 5 overlaps with the pattern portion of the pattern layer 3 in plan view.

The thickness of the surface protective layer 5 may be adjusted by adjusting the amount of applied material in the printing method or coating method described above. The amount of applied material can be obtained by preparing a substrate (primary film layer) provided with a surface protective layer and a substrate (primary film layer) provided with no surface protective layer using various printing methods or coating methods, and calculating the mass difference between the substrates.

The surface protective layer 5 contains an ionizing radiation-curable resin as a main material. The main material is an acrylic resin composed of 70 parts by mass or more of acrylic monomer with respect to 100 parts by mass of the surface protective layer, and contains, as an acrylic monomer, at least a bifunctional acrylic monomer containing, as a repeating structure, one of an ethylene oxide structure, a propylene oxide structure, and an ε-caprolactone structure.

The ionizing radiation-curable resin constituting the surface protective layer 5 may be a known material such as various monomers or a commercially available oligomer, and may be, for example, a (meth)acrylic resin, a silicone resin, a polyester resin, a urethane resin, an amide resin, or an epoxy resin. The ionizing radiation-curable resin may be an aqueous resin or a nonaqueous (organic solvent) resin.

The main component of the ionizing radiation-curable resin constituting the surface protective layer 5 is a polymer of a bifunctional acrylate monomer containing, as a repeating structure, one of an ethylene oxide structure, a propylene oxide structure, and an $\varepsilon$-caprolactone structure.

The bifunctional acrylate monomer may be, for example, polyethylene glycol diacrylate or the like.

In order to allow the decorative sheet to have higher scratch resistance, a polyfunctional acrylate monomer having three or more functional groups, such as a hexafunctional acrylate monomer, for example, dipentaerythritol hexaacrylate, may be mixed with the main component composed of the bifunctional acrylate monomer.

However, the mixing of a polyfunctional acrylate monomer having three or more functional groups with the bifunctional acrylate monomer causes a thickened acrylate monomer, leading to lower decorative sheet productivity; thus, the viscosity of the mixture of the polyfunctional acrylate monomer having three or more functional groups and the bifunctional acrylate monomer is preferably 100 mPa·s or less at 25°C. An excessively high viscosity of the coating liquid is not preferable because the excessively high viscosity may cause formation of a non-uniform film, and generates a portion of the surface protective layer on which no uneven structure is formed, when the surface protective layer is irradiated with light having a wavelength of 200 nm or less.

The repeating structure is one of an oxyethylene ($-CH_2CH_2O-$) structure, an oxypropylene ($-CH_2CH_2CH_2O-$ or $-CH_2CH(CH_3)O-$) structure, an oxytetramethylene ($-CH_2CH_2CH_2CH_2O-$) structure, and an $\varepsilon$-caprolactone structure. More preferably, the repeating structure is an ethylene oxide structure or a propylene oxide structure. The ethylene oxide structure, the propylene oxide structure, and the $\varepsilon$-caprolactone structure are preferable because these structures allow free rotation of molecules, and the highly flexible molecules enable the polymer to be highly flexible and be deformed when the surface is cured by irradiation with light having a short wavelength of 200 nm or less, thus allowing easy formation of a fine uneven structure.

In the repeating structure, the number of carbon and oxygen atoms between both carbonyl carbons contained in the acryloyl group or the acryloyloxy group is preferably 8 or more.

The number of carbon and oxygen atoms between both carbonyl carbons contained in the acryloyl group or the acryloyloxy group of less than 8 leads to high toxicity, and is thus not preferable in terms of manufacturing safety.

The number of carbon and oxygen atoms between both carbonyl carbons contained in the acryloyl group or the acryloyloxy group of more than 29 causes the surface protective layer 5 to be excessively highly flexible and have lower scratch resistance, and is thus not preferable.

The repeating structure and the number of carbon and oxygen atoms contained in the repeating structure can be analyzed using MALDI-TOF-MS. In some cases, an ionizing radiation-curable resin has a molecular weight distribution. When an ionizing radiation-curable resin has a molecular weight distribution, the number of repetitions included in the repeating structure can be the number of repetitions corresponding to the molecular weight having the strongest MALDI-TOF-MS mass spectral peak, and the number of repetitions can be used to count the number of carbon and oxygen atoms between the carbonyl carbons in the acryloyl group or the acryloyloxy group.

The surface protective layer 5 may contain particles. A surface protective layer 5 containing an optimum amount of particles having an optimum particle size can have a uniform surface. The particles may be made of, for example, an organic material such as PE wax, PP wax, or resin beads, or an inorganic material such as silica, glass, alumina, titania, zirconia, calcium carbonate, or barium sulfate. The average particle size (D50) of the particles is preferably 10 μm or less. The average particle size is more preferably 1 μm or more and 8 μm or less, still more preferably 2 μm or more and 6 μm or less, and most preferably 3 μm or more and 5 μm or less. The average particle size of more than 10 μm leads to lower scratch resistance due to detachment of particles, and is thus not preferable. The average particle size of less than 1 μm leads to a small uniform surface effect, and is thus not preferable.

The amount of particles is preferably 0.5 parts by mass or more and 10 parts by mass or less with respect to 100 parts by mass of the ionizing radiation-curable resin. The amount of particles is more preferably 2 parts by mass or more and 8 parts by mass or less, still more preferably 2 parts by mass or more and 6 parts by mass or less, and most preferably 4 parts by mass or more and 5 parts by mass or less. The surface protective layer 5 containing the above amount of particles can have a uniform surface, and is preferable.

The "particle size (average particle size)" may be a value (average value) obtained by particle size distribution measurement of the particles used, or may be a value obtained by actually measuring the particle size of a plurality of particles by cross-sectional observation of the obtained decorative material and averaging the particle sizes. These two values are measured by different methods, but the obtained values of the particle size are substantially the same. For example, the average particle size of the particles contained in the surface protective layer 5 may be a median size (D50) measured using a laser diffraction/scattering particle size distribution measuring device.

To cure the entire surface protective layer 5 with UV light, a photoinitiator needs to be added to the surface protective layer 5. The photoinitiator is not specifically limited, and may be, for example, a benzophenone photoinitiator, an acetophenone photoinitiator, a benzoin ether photoinitiator, a thioxanthone photoinitiator, or the like.

The surface protective layer 5 may arbitrarily contain functional additives such as an antibacterial agent and an antifungal agent to obtain a required function. Furthermore, the surface protective layer 5 may contain, as necessary, an ultraviolet absorber and a photostabilizer. The surface protective layer 5 typically contains any combination of an ultraviolet absorber, for example, a benzotriazole ultraviolet absorber, a benzoate ultraviolet absorber, a benzophenone ultraviolet absorber, a triazine ultraviolet absorber, or the like and a photostabilizer, for example, a hindered amine photostabilizer or the like.

The decorative sheet 1 having the configuration described above has a 60° specular gloss of 12 or less although the decorative sheet 1 contains no gloss control agent (matting additive). **In** a conventional decorative sheet that includes a surface protective layer and has a glossiness of 8 or less, the surface protective layer has a high content of gloss control agent and is opaque. Thus, the color and pattern of a colored pattern layer may not be clearly exhibited, or the decorative sheet may have lower designability. Furthermore, when a decorative sheet having a glossiness close to 0 is to be obtained, a surface protective layer of the decorative sheet has an even higher content of gloss control agent; thus, it is difficult to form the surface protective layer with a smooth surface without causing streaks, non-uniformity, or the like during formation of the surface protective layer.

The decorative sheet 1 can have a glossiness of 12 or less while maintaining approximately the same performance as a decorative sheet having a glossiness of 20 or more. The "60° specular gloss" is a measurement value measured at an incident angle of 60 degrees using a glossmeter in accordance with JIS Z 8741.

<Concealing layer 8>

The decorative sheet 1 having concealing properties with respect to the substrate B can be obtained by using a colored sheet as the primary film layer 2 or by separately forming the concealing layer 8 that is opaque. The concealing layer 8 can be made of basically the same material as the pattern layer 3, but to obtain concealing properties, the concealing layer 8 preferably contains, as a pigment, for example, an opaque pigment, titanium oxide, iron oxide, or the like. The concealing layer 8 may contain, for example, a metal such as gold, silver, copper, or aluminum to obtain higher concealing properties. **In** general, the concealing layer 8 often contains aluminum flakes.

(Production method)

Next, a production example of the decorative sheet 1 will be described.

Aresin film is used as the primary film layer 2, and the surface protective layer 5 is formed on the upper surface of the primary film layer 2 by printing. **In** the surface protective layer 5, the surface of an applied ionizing radiation-curable resin is irradiated with light having a wavelength of 200 nm or less (first irradiation light) to shrink the surface of the ionizing radiation-curable resin. Subsequently, to cure the shrunk ionizing radiation-curable resin, the ionizing radiation-curable resin is irradiated with ionizing radiation or UV light having a longer wavelength than the light having a wavelength of 200 nm or less that is first irradiation light. Thus, the decorative sheet 1 including the surface protective layer 5 having the core portion 5A, and the ridge portion 5B projecting in a ridge shape from one surface (upper surface) of the core portion 5A.

(Effects and others)

The decorative sheet 1 according to the present embodiment includes the surface protective layer 5 having a surface on which an uneven structure is formed. This configuration makes it possible to adjust the gloss (glossiness) of a surface protective layer even when the surface protective layer contains no gloss control agent (matting additive). A gloss control agent causes a layer made of a resin material to have lower oil repellency; thus, fingerprints are more likely to remain on the layer containing a gloss control agent. The surface protective layer 5 according to the present embodiment contains no gloss control agent, and thus does not absorb oil and has relatively higher oil repellency. Therefore, fingerprints are less likely to remain on the decorative sheet 1 including the surface protective layer 5 in various situations in site construction, furniture assembly, and residents' daily life.

Furthermore, the surface protective layer 5 having a surface on which an uneven structure is formed has higher oil repellency, and thus prevents adsorption of oil stains or contamination on the surface of the decorative sheet 1.

In the surface protective layer 5 containing no gloss control agent, no detachment of gloss control agent particles occurs when the surface of the decorative sheet 1 is scratched; thus, a change in gloss and scratching are less likely to occur on the surface of the decorative sheet 1.

The surface protective layer 5 having a Martens hardness in the range of 5 N/mm$^2$ or more and 142 N/mm$^2$ or less has a certain hardness; thus, curling of the decorative sheet 1 caused by curing shrinkage of the surface protective layer 5 is less likely to occur, allowing easy lamination of the decorative sheet 1 on a substrate.

Furthermore, the surface protective layer 5 having a Martens hardness in the range of 5 N/mm$^2$ or more and 142 N/mm$^2$ or less has appropriate flexibility; thus, the decorative sheet 1 is less likely to be torn (the decorative sheet 1 is less likely to be damaged).

In the present embodiment, the surface protective layer 5 is composed of a single layer; however, the configuration of the surface protective layer 5 is not limited to this configuration. For example, the surface protective layer 5 may be composed of a multilayer. That is, the surface protective layer 5 may be obtained by laminating a plurality of layers of the same ionizing radiation-curable resin or a plurality of layers of different ionizing radiation-curable resins, and forming an uneven structure on the surface of the surface protective layer 5. When a plurality of layers of different ionizing radiation-curable resins are laminated, each of the ionizing radiation-curable resins preferably satisfies all the following conditions. That is, the main component of each of the ionizing radiation-curable resins contains at least one of an alkylene repeating structure and an alkylene oxide repeating structure , and contains a resin obtained by polymerizing an acrylic monomer having 2 or more and 4 or less acryloyloxy groups, the alkylene oxide repeating structure is one of an ethylene oxide structure, a propylene oxide structure, and an ε-caprolactone structure, the acrylic monomer has 2 acryloyl groups, the acrylic monomer has an acryloyl group chain length of 10 or more and 28 or less, and the acrylic monomer has a viscosity of 100 mPa·s or less at 25°C.

[Examples]

Examples based on the present invention will be described below.

[Examples]

<Example 1>

Impregnated paper having a basis weight of 50 g/m$^2$ (GFR-506; manufactured by Kohjin) was used as the primary film layer 2, and an oil-based nitrocellulose resin gravure printing ink (PCNT (PCRNT) in various colors; manufactured by Toyo Ink Co., Ltd.) was used to form the pattern layer 3 on one surface of the primary film layer 2, followed by application of the following surface protective layer coating liquid. The surface protective layer coating liquid had a thickness of 5 μm. Then, an uneven structure was formed on the surface of the surface protective layer coating liquid by irradiating the surface with light having a wavelength of 172 nm using a Xe excimer lamp so that the integrated amount of light was 100 mJ/cm$^2$. Subsequently, the surface protective layer coating liquid was cured by irradiation with ionizing radiation to form the surface protective layer 5, thereby obtaining a decorative sheet of Example 1.

(Surface protective layer coating liquid)

The surface protective layer coating liquid was composed of the following ionizing radiation-curable resin and particles.

· Ionizing radiation-curable resin

(Bifunctional acrylate monomer)

Product name: NK Ester A-400 (manufactured by Shin-Nakamura Chemical Co., Ltd.)
Amount: 100 parts by mass

· Particles

Product name: Sylysia 250N (manufactured by Fuji Silysia Chemical Ltd.)

Particle size: 5 μm

Amount: 0.5 parts by mass

<Example 2>

A decorative sheet of Example 2 was obtained in the same manner as in Example 1 except that the bifunctional acrylate monomer of the ionizing radiation-curable resin of Example 1 was replaced with the following bifunctional monomer.

· Ionizing radiation-curable resin

(Bifunctional acrylate monomer)

Product name: A-200 (manufactured by Shin-Nakamura Chemical Co., Ltd.)

Amount: 100 parts by mass

<Example 3>

A decorative sheet of Example 3 was obtained in the same manner as in Example 1 except that the bifunctional acrylate monomer of the ionizing radiation-curable resin of Example 1 was replaced with the following bifunctional monomer.

· Ionizing radiation-curable resin

(Bifunctional acrylate monomer)

Product name: APG-400 (manufactured by Shin-Nakamura Chemical Co., Ltd.)

Amount: 100 parts by mass

<Example 4>

A decorative sheet of Example 4 was obtained in the same manner as in Example 1 except that the bifunctional acrylate monomer of the ionizing radiation-curable resin of Example 1 was replaced with the following bifunctional monomer.

· Ionizing radiation-curable resin

(Bifunctional acrylate monomer)

Product name: SR306H (manufactured by Sartomer)

Amount: 100 parts by mass

<Example 5>

A decorative sheet of Example 5 was obtained in the same manner as in Example 1 except that the bifunctional acrylate monomer of the ionizing radiation-curable resin of Example 1 was replaced with the following bifunctional monomer.

· Ionizing radiation-curable resin

(Bifunctional acrylate monomer)

Product name: 1.9ND-A (manufactured by Kyoeisha Chemical Co., Ltd.)

Amount: 100 parts by mass

<Example 6>

A decorative sheet of Example 6 was obtained in the same manner as in Example 1 except that the bifunctional acrylate monomer of the ionizing radiation-curable resin of Example 1 was replaced with the following bifunctional monomer.

· Ionizing radiation-curable resin

(Bifunctional acrylate monomer)

Product name: SR495 (manufactured by Sartomer)

Amount: 100 parts by mass

<Example 7>

A decorative sheet of Example 7 was obtained in the same manner as in Example 1 except that the bifunctional acrylate monomer of the ionizing radiation-curable resin of Example 1 was replaced with a combination of the following bifunctional monomer and hexafunctional monomer. For convenience, A-DPH is indicated as a hexafunctional monomer; however, the actual number of functional groups is 5 to 6, and is calculated from the acid value (mg KOH/g) of the product.

· Ionizing radiation-curable resin

(Bifunctional acrylate monomer)

Product name: A-400 (manufactured by Sartomer)

Amount: 90 parts by mass

(Hexafunctional acrylate monomer)

Product name: A-DPH (manufactured by Shin-Nakamura Chemical Co., Ltd.)

Amount: 10 parts by mass

<Example 8>

A decorative sheet of Example 8 was obtained in the same manner as in Example 1 except that the bifunctional acrylate monomer of the ionizing radiation-curable resin of Example 1 was replaced with a combination of the following bifunctional monomer and hexafunctional monomer. For convenience, A-DPH is indicated as a hexafunctional monomer; however, the actual number of functional groups is 5 to 6, and is calculated from the acid value (mg KOH/g) of the product.

· Ionizing radiation-curable resin

(Bifunctional acrylate monomer)

Product name: 1.9ND-A (manufactured by Kyoeisha Chemical Co., Ltd.)

Amount: 90 parts by mass

EP 4 538 039 A1

(Hexafunctional acrylate monomer)

Product name: A-DPH (manufactured by Shin-Nakamura Chemical Co., Ltd.)

Amount: 10 parts by mass

<Example 9>

A decorative sheet of Example 9 was obtained in the same manner as in Example 1 except that the bifunctional acrylate monomer of the ionizing radiation-curable resin of Example 1 was replaced with a combination of the following bifunctional monomer and hexafunctional monomer. For convenience, A-DPH is indicated as a hexafunctional monomer; however, the actual number of functional groups is 5 to 6, and is calculated from the acid value (mg KOH/g) of the product.

· Ionizing radiation-curable resin

(Bifunctional acrylate monomer)

Product name: A-400 (manufactured by Shin-Nakamura Chemical Co., Ltd.)

Amount: 90 parts by mass

(Hexafunctional acrylate monomer)

Product name: A-DPH-12E (manufactured by Shin-Nakamura Chemical Co., Ltd.)
Amount: 10 parts by mass

<Example 10>

A decorative sheet of Example 10 was obtained in the same manner as in Example 1 except that the bifunctional acrylate monomer of the ionizing radiation-curable resin of Example 1 was replaced with a combination of the following bifunctional monomer and hexafunctional monomer. For convenience, A-DPH-12E is indicated as a hexafunctional monomer; however, the actual number of functional groups is 5 to 6, and is calculated from the acid value (mg KOH/g) of the product.

· Ionizing radiation-curable resin

(Bifunctional acrylate monomer)

Product name: A-200 (manufactured by Shin-Nakamura Chemical Co., Ltd.)

Amount: 90 parts by mass

(Hexafunctional acrylate monomer)

Product name: A-DPH-12E (manufactured by Shin-Nakamura Chemical Co., Ltd.)

Amount: 10 parts by mass

<Example 11>

A decorative sheet of Example 11 was obtained in the same manner as in Example 1 except that the bifunctional acrylate monomer of the ionizing radiation-curable resin of Example 1 was replaced with a combination of the following bifunctional monomer and hexafunctional monomer. For convenience, A-DPH-12E is indicated as a hexafunctional monomer; however, the actual number of functional groups is 5 to 6, and is calculated from the acid value (mg KOH/g) of the product.

· Ionizing radiation-curable resin

(Bifunctional acrylate monomer)

Product name: APG-400 (manufactured by Shin-Nakamura Chemical Co., Ltd.)

Amount: 90 parts by mass

(Hexafunctional acrylate monomer)

Product name: A-DPH-12E (manufactured by Shin-Nakamura Chemical Co., Ltd.)

Amount: 10 parts by mass

<Example 12>

A decorative sheet of Example 12 was obtained in the same manner as in Example 1 using the ionizing radiation-curable resin of Example 1 except that the thickness of the surface protective layer coating liquid was 1 $\mu$m.

<Example 13>

A decorative sheet of Example 13 was obtained in the same manner as in Example 1 using the ionizing radiation-curable resin of Example 1 except that the thickness of the surface protective layer coating liquid was 2 $\mu$m.

<Example 14>

A decorative sheet of Example 14 was obtained in the same manner as in Example 1 using the ionizing radiation-curable resin of Example 1 except that the thickness of the surface protective layer coating liquid was 20 $\mu$m.
<Example 15>
A decorative sheet of Example 15 was obtained in the same manner as in Example 1 using the ionizing radiation-curable resin of Example 1 except that the thickness of the surface protective layer coating liquid was 25 $\mu$m.

<Example 16>

A decorative sheet of Example 16 was obtained in the same manner as in Example 1 using the ionizing radiation-curable resin of Example 1 except that the ionizing radiation-curable resin contained no particles.

<Example 17>

A decorative sheet of Example 17 was obtained in the same manner as in Example 1 using the ionizing radiation-curable resin of Example 1 except that the particle size of the particles contained in the surface protective layer coating liquid was changed to 8 $\mu$m.

· Particles

Product name: Sylysia 450 (manufactured by Fuji Silysia Chemical Ltd.)

Particle size: 8 μm

Amount: 0.5 parts by mass

<Example 18>

A decorative sheet of Example 18 was obtained in the same manner as in Example 1 using the ionizing radiation-curable resin of Example 1 except that the particle size of the particles contained in the surface protective layer coating liquid was changed to 11.3 μm.

· Particles

Product name: Sylysia 780 (manufactured by Fuji Silysia Chemical Ltd.)

Particle size: 11.3 μm

Amount: 0.5 parts by mass

<Example 19>

A decorative sheet of Example 19 was obtained in the same manner as in Example 1 using the ionizing radiation-curable resin of Example 1 except that the amount of the particles contained in the surface protective layer coating liquid was changed to 10 parts by mass.

<Example 20>

A decorative sheet of Example 20 was obtained in the same manner as in Example 1 using the ionizing radiation-curable resin of Example 1 except that the amount of the particles contained in the surface protective layer coating liquid was changed to 11 parts by mass.

[Comparative Examples]

Comparative examples based on the present invention will be described below.

<Comparative Example 1>

A decorative sheet of Comparative Example 1 was obtained in the same manner as in Example 1 except that the bifunctional acrylate monomer of the ionizing radiation-curable resin of Example 1 was replaced with the following bifunctional monomer.

· Ionizing radiation-curable resin

(Bifunctional acrylate monomer)

Product name: D5381 (manufactured by Tokyo Chemical Industry Co., Ltd.)
Amount: 100 parts by mass

<Comparative Example 2>

A decorative sheet of Comparative Example 2 was obtained in the same manner as in Example 1 except that the bifunctional acrylate monomer of the ionizing radiation-curable resin of Example 1 was replaced with the following bifunctional monomer.

· Ionizing radiation-curable resin

(Bifunctional acrylate monomer)

Product name: A-600 (manufactured by Shin-Nakamura Chemical Co., Ltd.)

Amount: 100 parts by mass

<Comparative Example 3>

A decorative sheet of Comparative Example 3 was obtained in the same manner as in Example 1 except that the bifunctional acrylate monomer of the ionizing radiation-curable resin of Example 1 was replaced with the following monofunctional monomer.

· Ionizing radiation-curable resin

(Monofunctional acrylate monomer)

Product name: MTG-A (manufactured by Kyoeisha Chemical Co., Ltd.)

Amount: 100 parts by mass

<Comparative Example 4>

A decorative sheet of Comparative Example 4 was obtained in the same manner as in Example 1 except that the bifunctional acrylate monomer of the ionizing radiation-curable resin of Example 1 was replaced with the following monofunctional monomer.

· Ionizing radiation-curable resin

(Monofunctional acrylate monomer)

Product name: AM-90G (manufactured by Shin-Nakamura Chemical Co., Ltd.)

Amount: 100 parts by mass

<Comparative Example 5>

A decorative sheet of Comparative Example 5 was obtained in the same manner as in Example 1 except that the bifunctional acrylate monomer of the ionizing radiation-curable resin of Example 1 was replaced with the following trifunctional monomer.

· Ionizing radiation-curable resin

(Trifunctional acrylate monomer)

Product name: A-TMPT (manufactured by Shin-Nakamura Chemical Co., Ltd.)

Amount: 100 parts by mass

<Comparative Example 6>

A decorative sheet of Comparative Example 6 was obtained in the same manner as in Example 1 except that the bifunctional acrylate monomer of the ionizing radiation-curable resin of Example 1 was replaced with the following trifunctional monomer.

· Ionizing radiation-curable resin

(Trifunctional acrylate monomer)

Product name: SR454 (manufactured by Sartomer)

Amount: 100 parts by mass

<Comparative Example 7>

A decorative sheet of Comparative Example 7 was obtained in the same manner as in Example 1 except that the bifunctional acrylate monomer of the ionizing radiation-curable resin of Example 1 was replaced with the following trifunctional monomer.

· Ionizing radiation-curable resin

(Trifunctional acrylate monomer)

Product name: SR502 (manufactured by Sartomer)

Amount: 100 parts by mass

<Comparative Example 8>

A decorative sheet of Comparative Example 8 was obtained in the same manner as in Example 1 except that the bifunctional acrylate monomer of the ionizing radiation-curable resin of Example 1 was replaced with the following trifunctional monomer.

· Ionizing radiation-curable resin

(Trifunctional acrylate monomer)

Product name: SR9035 (manufactured by Sartomer)

Amount: 100 parts by mass

<Comparative Example 9>

A decorative sheet of Comparative Example 9 was obtained in the same manner as in Example 1 except that the bifunctional acrylate monomer of the ionizing radiation-curable resin of Example 1 was replaced with the following tetrafunctional monomer.

· Ionizing radiation-curable resin

(Tetrafunctional acrylate monomer)

Product name: A-TMMT (manufactured by Shin-Nakamura Chemical Co., Ltd.)

Amount: 100 parts by mass

<Comparative Example 10>

A decorative sheet of Comparative Example 10 was obtained in the same manner as in Example 1 except that the bifunctional acrylate monomer of the ionizing radiation-curable resin of Example 1 was replaced with the following tetrafunctional monomer.

· Ionizing radiation-curable resin

(Tetrafunctional acrylate monomer)

Product name: D5687 (manufactured by Tokyo Chemical Industry Co., Ltd.)

Amount: 100 parts by mass

<Comparative Example 11>

A decorative sheet of Comparative Example 11 was obtained in the same manner as in Example 1 except that the bifunctional acrylate monomer of the ionizing radiation-curable resin of Example 1 was replaced with the following tetrafunctional monomer.

· Ionizing radiation-curable resin

(Tetrafunctional acrylate monomer)

Product name: ATM-4E (manufactured by Shin-Nakamura Chemical Co., Ltd.)

Amount: 100 parts by mass

<Comparative Example 12>

A decorative sheet of Comparative Example 12 was obtained in the same manner as in Example 1 except that the bifunctional acrylate monomer of the ionizing radiation-curable resin of Example 1 was replaced with the following hexafunctional monomer. For convenience, A-DPH is indicated as a hexafunctional monomer; however, the actual number of functional groups is 5 to 6, and is calculated from the acid value (mg KOH/g) of the product.

· Ionizing radiation-curable resin

(Hexafunctional acrylate monomer)

Product name: A-DPH (manufactured by Shin-Nakamura Chemical Co., Ltd.)

Amount: 100 parts by mass

<Comparative Example 13>

A decorative sheet of Comparative Example 13 was obtained in the same manner as in Example 1 except that the bifunctional acrylate monomer of the ionizing radiation-curable resin of Example 1 was replaced with the following hexafunctional monomer. For convenience, A-DPH-12E is indicated as a hexafunctional monomer; however, the actual number of functional groups is 5 to 6, and is calculated from the acid value (mg KOH/g) of the product.

· Ionizing radiation-curable resin

(Hexafunctional acrylate monomer)

Product name: A-DPH-12E (manufactured by Shin-Nakamura Chemical Co., Ltd.)

Amount: 100 parts by mass

<Comparative Example 14>

A decorative sheet of Comparative Example 14 was obtained in the same manner as in Example 1 except that the bifunctional acrylate monomer of the ionizing radiation-curable resin of Example 1 was replaced with a combination of the following bifunctional monomer and hexafunctional monomer. For convenience, A-DPH is indicated as a hexafunctional monomer; however, the actual number of functional groups is 5 to 6, and is calculated from the acid value (mg KOH/g) of the product.

· Ionizing radiation-curable resin

(Bifunctional acrylate monomer)

Product name: A-400 (manufactured by Sartomer)

Amount: 80 parts by mass

(Hexafunctional acrylate monomer)

Product name: A-DPH (manufactured by Shin-Nakamura Chemical Co., Ltd.)

Amount: 20 parts by mass

[Evaluation]

The decorative sheets of Examples 1 to 20 and Comparative Examples 1 to 14 obtained by the above method were evaluated.
In the examples and the comparative examples, decorative sheets evaluated as "good" or "fair" can be used without any practical problem, and thus passed the evaluation.

<Surface state>

The surface state was evaluated in terms of surface uniformity by visual observation.
The evaluation criteria were as follows.

Good: Surface was in a uniform state.

Fair: Part of the surface was in a non-uniform state.

Poor: Entire surface was in a non-uniform state.

<Glossiness>

The glossiness was evaluated by measuring the 60-degree glossiness using a Rhopoint IQ (manufactured by Konica Minolta, Inc.). In Tables 1 and 2, the 60-degree glossiness is indicated as "60° glossiness value".

<Method of measuring Martens hardness>

A method of measuring the Martens hardness will be described. The Martens hardness of each of the decorative sheets can be measured using a Martens hardness measuring device (Fischerscope HM2000; manufactured by Fischer Instruments) in accordance with ISO 14577.

When the components of the ionizing radiation-curable resin are determined by analysis, the corresponding ionizing radiation-curable resin is used to form a coating film having a thickness of 10 $\mu$m to 15 $\mu$m, and the coating film is cured by irradiation with ionizing radiation at an acceleration voltage of 120 kV with an irradiation dose of 150 kGy, after which the Martens hardness is measured. Specifically, in the measurement, an indenter is pressed into the measurement surface of each sample, and the Martens hardness is calculated from the depth to which the indenter was pressed, and the load. The measurement can be performed under the measurement conditions of a test force of 1 mN, a test force load required time of 10 seconds, and a test force retention time of 5 seconds.

In the examples and the comparative examples, the Martens hardness was measured by the above method.

The measurement can be performed on a cross section. To perform cross section measurement, the decorative sheet 1 is embedded in a resin such as a cold-setting epoxy resin or a UV-curable resin and sufficiently cured, and then cut so that a cross section of the decorative sheet 1 is exposed, followed by mechanical polishing to obtain a measurement surface of the sample. Specifically, in the measurement, as with the above method, an indenter is pressed into the measurement surface of each sample, and the Martens hardness is calculated from the depth to which the indenter was pressed, and the load. The measurement can be performed under the measurement conditions of a test force of 1 mN, a test force load required time of 10 seconds, and a test force retention time of 5 seconds.

<Fingerprint resistance: Evaluation of wiping properties>

The fingerprint resistance was evaluated by evaluating fingerprint wiping properties.

The 60-degree glossiness of the surface of each of the decorative sheets was measured to obtain an [initial glossiness]. Subsequently, a fingerprint resistance evaluation liquid was applied onto the surface protective layer, and then the fingerprint resistance evaluation liquid attached to the decorative sheet surface was wiped off. Subsequently, the 60-degree glossiness of a portion of the surface from which the fingerprint resistance evaluation liquid was wiped off was measured to obtain a value [glossiness after wiping]. The fingerprint resistance evaluation liquid used was a higher fatty acid.

The fingerprint wiping ratio was calculated as follows.

$$\text{Fingerprint wiping ratio (\%)} = (\text{Glossiness after wiping/Initial glossiness}) \times 100$$

The evaluation criteria were as follows.

Good: 70% or more and less than 250%

Fair: 50% or more and less than 70%, or 250% or more and less than 300%

Poor: Less than 50%, or 300% or more

<Stain resistance>

The stain resistance was evaluated using Stain Test A defined by Japanese Agricultural Standards (JAS). On each of the decorative sheets, a line with a width of 10 mm was drawn in each of blue ink, black quick-drying ink, and red crayon, and left to stand for 4 hours. Then, the lines in blue ink, black quick-drying ink, and red crayon were wiped off with a cloth soaked with ethanol, and the stain resistance to ink was evaluated.

The evaluation criteria were as follows.

Good: Lines of colors were easily wiped off.

Fair: Part of the lines of colors was easily wiped off, but staining was left on part of the decorative sheet.

Poor: Lines of colors were not wiped off.

<Scratch resistance test: Steel wool rubbing test>

Each of the obtained decorative sheets was adhered to a wooden substrate B using a urethane adhesive, followed by a steel wool rubbing test to evaluate the scratch resistance. The decorative sheet surface was rubbed back and forth 20 times with steel wool while a load of 100 g was applied to the steel wool, and the decorative sheet surface was checked for scratching and changes in gloss by visual observation.
The evaluation criteria were as follows.

Good: No scratching or changes in gloss occurred on the surface.

Fair: Minor scratching or changes in gloss occurred on the surface.

Poor: Significant scratching or changes in gloss occurred on the surface.

<Processability test: Curling>

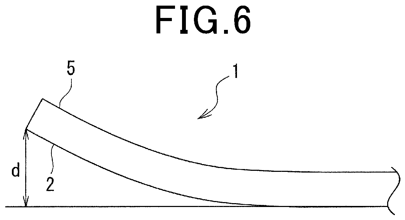

A 10-cm square piece was cut out from each of the obtained decorative sheets, and allowed to stand at 25°C and 50% RH for 48 hours. Then, the average of the distances between the four corners and the flat surface of the decorative sheet piece was calculated. Specifically, in the curling property test, as shown in Fig. 6, a minimum distance d from the surface (flat surface) of a test stand on which the decorative sheet was placed to each of the corners of the decorative sheet was measured, and the values of the distance were averaged to evaluate the curling properties of the decorative sheet. The curling properties serve as an indicator for the ease of lamination of the decorative sheet on a substrate.
The evaluation criteria were as follows.

Good: 3 cm or less

Fair: More than 3 cm and 5 cm or less

Poor: More than 5 cm

<Processability test: Lapping (tearing)>

Each of the obtained decorative sheets was lapped. An end portion of each cut decorative sheet was visually observed to evaluate the occurrence of tearing.
The evaluation criteria were as follows.

Good: No tearing was observed.

Fair: Tearing was observed on part of the surface.

Poor: Tearing was observed on the entire surface.

<Productivity test: Measurement of viscosity>

The viscosity at a shear rate of 10 s-1 at 25°C of the acrylate monomer for forming the surface protective layer was measured based on JIS Z 8803: 2011 using a rotation rheometer (MCR-102) manufactured by Anton Paar.

<Index RSm>

The index RSm of the uneven structure of the surface protective layer was measured using a line roughness meter (in accordance with JIS B0601).
The evaluation results and measurement results are shown in Tables 1 and 2.

[Table 1]

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|---|---|---|---|---|---|---|---|---|---|
| | Viscosity mPa·s @ 25°C | 60 | 25 | 35 | 13 | 10 | 80 | 97 | 19 | 71 | 44 | 60 | 60 | 60 | 60 | 60 | 60 | 60 | 60 | 60 | 60 |
| | Surface shape | Ridge shape | Ridge shape | Ridge shape | Ridge shape | Ridge shape | Ridge shape | Ridge shape | Ridge shape | Ridge shape | Ridge shape | Ridge shape | Ridge shape | Ridge shape | Ridge shape | Ridge shape | Ridge shape | Ridge shape | Ridge shape | Ridge shape | Ridge shape |
| | RSm | 145 | 210 | 156 | 163 | 239 | 241 | 174 | 278 | 198 | 251 | 202 | 310 | 245 | 139 | 135 | 148 | 139 | 147 | 136 | 138 |
| | Martens hardness (N/mm²) | 7 | 119 | 7 | 141 | 125 | 133 | 31 | 135 | 113 | 129 | 77 | 8 | 8 | 7 | 7 | 7 | 8 | 7 | 8 | 8 |
| | Thickness (µm) | 5 | 5 | 5 | 5 | 5 | 5 | 5 | 5 | 5 | 5 | 5 | 1 | 2 | 20 | 25 | 5 | 5 | 5 | 5 | 5 |
| Main component of ionizing radiation-curable resin | Ratio (parts by mass) | 100 | 100 | 100 | 100 | 100 | 100 | 90 | 90 | 90 | 90 | 90 | 100 | 100 | 100 | 100 | 100 | 100 | 100 | 100 | 100 |

| | | | | | | | | | | | | | | | | | | | | |
|---|---|---|---|---|---|---|---|---|---|---|---|---|---|---|---|---|---|---|---|---|
| | Number of functional groups | 2 | 2 | 2 | 2 | 2 | 2 | 2 | 2 | 2 | 2 | 2 | 2 | 2 | 2 | 2 | 2 | 2 | 2 | 2 | 2 |
| Repeating structure | Structure | Oxyethylene | Oxyethylene | Oxyethylene | Oxyethylene | Alkylene | E-caprolactone | Oxyethylene | Alkylene | Oxyethylene | Oxyethylene | Oxypropylene | Oxyethylene | Oxyethylene | Oxyethylene | Oxyethylene | Oxyethylene | Oxyethylene | Oxyethylene | Oxyethylene | Oxyethylene |
| | Functional group chain length | 28 | 13 | 25 | 10 | 11 | 11 | 28 | 11 | 28 | 13 | 28 | 28 | 28 | 28 | 28 | 28 | 28 | 28 | 28 | 28 |

| | | | | | | | | | | | | | | | | | | | | | |
|---|---|---|---|---|---|---|---|---|---|---|---|---|---|---|---|---|---|---|---|---|---|
| Secondary component of ionizing radiation-curable resin | Ratio (parts by mass) | - | - | - | - | - | - | 10 | 10 | 10 | 10 | 10 | - | - | - | - | - | - | - | - | - |
| | Number of functional groups | - | - | - | - | - | - | 6 | 6 | 6 | 6 | 6 | - | - | - | - | - | - | - | - | - |
| Additive | Particle size (µm) | 5 | 5 | 5 | 5 | 5 | 5 | 5 | 5 | 5 | 5 | 5 | 5 | 5 | 5 | 5 | - | 8 | 11.3 | 5 | 5 |

| | | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|---|
| Amount (parts) | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | - | 0.5 | 0.5 | 10 | 11 |
| Surface state | | Good | Good | Good | Good | Good | Good | Good | Good | Good | Good | Good | Fair | Good | Good | Fair | Fair | Good | Good | Good | Good |
| 60° glossiness value | | 2 | 7.9 | 2.8 | 3.8 | 2.4 | 8.2 | 4.8 | 7.5 | 9.1 | 8.9 | 5.6 | 14 | 11.2 | 1.9 | 1.8 | 2.3 | 1.6 | 1.3 | 1.4 | 1.4 |
| Fingerprint resistance | | Good | Good | Good | Good | Good | Good | Good | Good | Good | Good | Good | Good | Good | Good | Good | Good | Good | Fair | Good | Fair |
| Stain resistance | Stain A | Good | Good | Good | Good | Good | Good | Very good | Very good | Very good | Very good | Very good | Good | Good | Good | Good | Good | Good | Fair | Good | Fair |
| Scratch resistance | Steel | Good | Good | Good | Good | Good | Good | Good | Good | Good | Good | Fair | Fair | Good | Good | Good | Fair | Good | Fair | Good | Fair |
| Processability | V-cut | Good | Good | Good | Good | Good | Fair | Good | Good | Good | Good | Good | Good | Good | Fair | Good | Good | Fair | Good | Good | Fair |
| Productivity | Non-uniformity | Good | Good | Good | Good | Good | Good | Fair | Good | Good | Good | Good | Good | Good | Good | Good | Good | Good | Good | Good | Good |

[Table 2]

|  | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 | Comp. Ex. 12 | Comp. Ex. 13 | Comp. Ex. 14 |
|---|---|---|---|---|---|---|---|---|---|---|---|---|---|---|---|
| Viscosity mPa·s @ 25°C | | 7 | 95 | 5 | 27 | 105 | 60.1 | 130 | 168 | 891 | 483 | 160 | 64/78 | 350 | 157 |
| Surface shape | | Ridge shape | Ridge shape | Ridge shape | Ridge shape | Smooth | Ridge shape | Ridge shape | Ridge shape | Smooth | Smooth | Smooth | Smooth | Smooth | Ridge shape |
| RSm | | 180.5 | 160.6 | 157 | 143 | 817 | 185 | 165.2 | 158.9 | 2010 | 1482 | 1547 | 2703 | 2083 | 180 |
| Martens hardness (N/mm$^2$) | | 149 | 4.3 | 10.8 | 0.6 | 155 | 139 | 6.09 | 9.5 | 306 | 209 | 213 | 300 | 121 | 60 |
| Thickness (µm) | | 5 | 5 | 5 | 5 | 5 | 5 | 5 | 5 | 5 | 5 | 5 | 5 | 5 | 5 |
| Main component of ionizing radiation-curable resin | Ratio (parts by mass) | 100 | 100 | 100 | 100 | 100 | 100 | 100 | 100 | 100 | 100 | 100 | 100 | 100 | 80 |
| | Number of functional groups | 2 | 2 | 1 | 1 | 3 | 3 | 3 | 3 | 4 | 4 | 4 | 6 | 6 | 2 |
| | Repeating structure — Structure | Oxyethylene | Oxyethylene | Oxyethylene | Oxyethylene | - | Oxyethylene | Oxyethylene | Oxyethylene |  | - | Oxyethylene | - | Oxyethylene | Oxyethylene |

| | | Functional group chain length | 7 | 43 | 11 | 28 | 5 | 11 | 23 | 35 | 5 | 9 | 11 | 9 | 21 | 28 |
|---|---|---|---|---|---|---|---|---|---|---|---|---|---|---|---|---|
| Secondary component of ionizing radiation-curable resin | | Ratio (parts by mass) | - | - | - | - | - | - | - | - | - | - | - | - | - | 20 |
| | | Number of functional groups | - | - | - | - | - | - | - | - | - | - | - | - | - | 6 |
| Additive | | Particle size (μm) | 5 | 5 | 5 | 5 | 5 | 5 | 5 | 5 | 5 | 5 | 5 | 5 | 5 | 5 |
| | | Amount (parts) | 0.5 | 0.5 | 0.5 | 0.5 | 0.5 | 0.5 | 0.5 | 0.5 | 0.5 | 0.5 | 0.5 | 0.5 | 0.5 | 0.5 |

27

| | | | | | | | | | | | | | | | |
|---|---|---|---|---|---|---|---|---|---|---|---|---|---|---|---|
| Surface state | | Poor | Good | Good | Good | Poor | Poor | Good | Good | Poor | Poor | Poor | Poor | Poor | |
| 60° glossiness value | | 4.8 | 1.7 | 3.1 | 0.7 | 85.6 | 9.4 | 3.5 | 2.2 | 96.3 | 90.9 | 92.8 | 96.4 | 93.4 | 5.2 |
| Fingerprint resistance | | Good | Good | Good | Good | Good | Good | Good | Good | Good | Good | Good | Good | Good | Good |
| Stain resistance | Stain A | Good | Good | Fair | Poor | Good | Good | Good | Good | Good | Good | Good | Good | Good | Very good |
| Scratch resistance | Steel | Good | Poor | Poor | Poor | Good | Good | Good | Good | Good | Good | Good | Good | Good | Good |
| Processability | V-cut | Poor | Good | Good | Good | Fair | Good | Good | Good | Poor | Poor | Poor | Poor | Fair | Good |
| Productivity | Non-uniformity | Good | Fair | Good | Good | Poor | Good | Poor | Poor | Poor | Poor | Poor | Poor | Poor | Poor |

As shown in Table 1, the decorative sheets of Examples 1 to 20 make it possible to provide a decorative sheet having fingerprint resistance, scratch resistance, stain resistance, and processability while having a glossiness of 12 or less. A decorative sheet having even higher performance is obtained by optimizing not only the surface shape and the resin composition of a surface protective layer of the decorative sheet but also the thickness of the surface protective layer and the particle size and amount of particles contained in the surface protective layer.

For example, the present invention may have the following configuration.

(1) A decorative sheet including: a primary film layer; and a surface protective layer provided on a first surface of the primary film layer, wherein

the surface protective layer has a glossiness of 12 or less,

the surface protective layer has a ridge portion projecting in a ridge shape on a surface to form an uneven structure,

the uneven structure of the surface protective layer has an RSm in a range of 10 or more and 310 or less,

the surface protective layer has a Martens hardness in a range of 5 or more and 142 or less,

the surface protective layer contains an ionizing radiation-curable resin as a main material,

a main component of the ionizing radiation-curable resin contains at least one of an alkylene repeating structure and an alkylene oxide repeating structure, and contains a resin obtained by polymerizing an acrylic monomer having 2 or more and 4 or less acryloyloxy groups,

the alkylene oxide repeating structure is one of an ethylene oxide structure, a propylene oxide structure, and an $\varepsilon$-caprolactone structure,

the acrylic monomer has 2 acryloyl groups,

the acrylic monomer has an acryloyl group chain length of 10 or more and 28 or less, the acryloyl group chain length being a number of atoms connecting the acryloyl groups with a shortest distance, and

the acrylic monomer has a viscosity of 100 mPa·s or less at 25°C.

The term "acryloyl group chain length" as used here refers to the number of carbon atoms or oxygen atoms connecting the carbonyl carbons of the acryloyl groups of the acrylic monomer that is the main component of the ionizing radiation-curable resin. The "acryloyl group chain length" does not include the number of branched methyl carbons as in isopropylene oxide. That is, the "acryloyl group chain length" refers to the number of atoms connecting the acryloyl groups with the shortest distance. When the acrylic monomer has 3 or more acryloyl groups, the "acryloyl group chain length" is the largest value (number of atoms) selected from all combinations of the acryloyl group chain lengths.

(2) The decorative sheet according to (1), wherein the surface protective layer has a thickness in a range of 2 $\mu$m or more and 20 $\mu$m or less.

(3) The decorative sheet according to (1) or (2), wherein the surface protective layer contains particles having an average particle size of 10 $\mu$m or less.

(4) The decorative sheet according to (3), wherein an amount of the particles is in a range of 0.5 parts by mass or more and 10 parts by mass or less with respect to 100 parts by mass of the ionizing radiation-curable resin.

(5) The decorative sheet according to any one of (1) to (3), wherein the primary film layer is made of paper or polypropylene.

(6) A method of producing the decorative sheet according to any one of (1) to (5), the method including irradiating a surface of an applied ionizing radiation-curable resin with light having a wavelength of 200 nm or less, followed by irradiation with ionizing radiation or UV light having a longer wavelength than the light having a wavelength of 200 nm or less to form a surface protective layer having a ridge portion projecting in a ridge shape.

(7) The method of producing the decorative sheet according (6), wherein the light having a wavelength of 200 nm or less has a wavelength of 172 nm.

[Reference Signs List]

1: Decorative sheet
2: Primary film layer
3: Pattern layer
4: Transparent resin layer
5: Surface protective layer
6: Primer layer
7: Adhesive layer
8: Concealing layer
11: Decorative material
B: Substrate

**Claims**

1. A decorative sheet comprising:

a primary film layer; and
a surface protective layer provided on a first surface of the primary film layer, wherein
the surface protective layer has a glossiness of 12 or less,
the surface protective layer has a ridge portion projecting in a ridge shape on a surface to form an uneven structure,
the uneven structure of the surface protective layer has an RSm in a range of 10 or more and 310 or less,
the surface protective layer has a Martens hardness in a range of 5 or more and 142 or less,
the surface protective layer contains an ionizing radiation-curable resin as a main material,
a main component of the ionizing radiation-curable resin contains at least one of an alkylene repeating structure and an alkylene oxide repeating structure , and contains a resin obtained by polymerizing an acrylic monomer having 2 or more and 4 or less acryloyloxy groups,
the alkylene oxide repeating structure is one of an ethylene oxide structure, a propylene oxide structure, and an ε-caprolactone structure,
the acrylic monomer has 2 acryloyl groups,
the acrylic monomer has an acryloyl group chain length of 10 or more and 28 or less, the acryloyl group chain length being a number of atoms connecting the acryloyl groups with a shortest distance, and
the acrylic monomer has a viscosity of 100 mPa·s or less at 25°C.

2. The decorative sheet according to claim 1, wherein
the surface protective layer has a thickness in a range of 2 $\mu$m or more and 20 $\mu$m or less.

3. The decorative sheet according to claim 1 or 2, wherein
the surface protective layer contains particles having an average particle size of 10 $\mu$m or less.

4. The decorative sheet according to claim 3, wherein
an amount of the particles is in a range of 0.5 parts by mass or more and 10 parts by mass or less with respect to 100 parts by mass of the ionizing radiation-curable resin.

5. The decorative sheet according to claim 1 or 2, wherein
the primary film layer is made of paper or polypropylene.

6. A method of producing the decorative sheet according to claim 1 or 2, the method comprising
irradiating a surface of an applied ionizing radiation-curable resin with light having a wavelength of 200 nm or less, followed by irradiation with ionizing radiation or UV light having a longer wavelength than the light having a wavelength of 200 nm or less to form a surface protective layer having a ridge portion projecting in a ridge shape.

7. The method of producing the decorative sheet according to claim 6, wherein
the light having a wavelength of 200 nm or less has a wavelength of 172 nm.

# FIG.1

# FIG.2

# FIG.3

# FIG.4

FIG.5

# FIG.6

# EP 4 538 039 A1

## INTERNATIONAL SEARCH REPORT

| | International application No. |
|---|---|
| | **PCT/JP2023/021174** |

**A. CLASSIFICATION OF SUBJECT MATTER**

*B32B 27/30*(2006.01)i; *B32B 3/30*(2006.01)i; *B32B 27/00*(2006.01)i; *E04F 13/07*(2006.01)i; *E04F 15/02*(2006.01)i
FI: B32B27/30 A; B32B3/30; B32B27/00 E; E04F13/07 B; E04F15/02 A

According to International Patent Classification (IPC) or to both national classification and IPC

**B. FIELDS SEARCHED**

Minimum documentation searched (classification system followed by classification symbols)

B32B27/30; B32B3/30; B32B27/00; E04F13/07; E04F15/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0031282 A (LG HAUSYS, LTD.) 24 March 2020 (2020-03-24) | 1-7 |
| A | JP 2021-24102 A (TAKIRON CO) 22 February 2021 (2021-02-22) | 1-7 |
| A | WO 2021/149480 A1 (TOPPAN PRINTING CO LTD) 29 July 2021 (2021-07-29) | 1-7 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

35

**INTERNATIONAL SEARCH REPORT**
Information on patent family members

International application No.

**PCT/JP2023/021174**

| Patent document cited in search report | | | Publication date (day/month/year) | Patent family member(s) | | | Publication date (day/month/year) |
|---|---|---|---|---|---|---|---|
| KR | 10-2020-0031282 | A | 24 March 2020 | (Family: none) | | | |
| JP | 2021-24102 | A | 22 February 2021 | (Family: none) | | | |
| WO | 2021/149480 | A1 | 29 July 2021 | US | 2023/0041625 | A1 | |
| | | | | EP | 4094934 | A1 | |
| | | | | CN | 114945463 | A | |
| | | | | KR | 10-2022-0113746 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019119138 A